# EUROPÄISCHE PATENTANMELDUNG

(11) **EP 1 855 495 A1**
(43) Veröffentlichungstag der Anmeldung: **14.11.2007**
(21) Anmeldenummer: 06009444.8
(22) Anmeldetag: 08.05.2006
(51) Int. Cl.: H04Q 7/38

(54) **Zufallszugriffverfahren in einem Mobilfunkkommunikationssystem**

(71) Anmelder: NOKIA SIEMENS NETWORKS S.P.A., 81541 München (DE)
(72) Erfinder: Chang, Xin, 81927 München (DE); Chen, Mu Room 404,, Haidan D. 100876 Beijing (CN); Halfmann, Rüdiger, 67697 Ottenberg (DE); Ping Hu, Zhen, Dr., 100102 Beijing (CN); Luo, Jijun, 80797 München (DE); Stadler, Thomas, 1130 Wien (AT)

(57) **Zusammenfassung**

Die Erfindung betrifft ein Verfahren zur Kommunikation per Funk, bei dem eine Teilnehmerstation (MS) Zufallszugriffs-Informationen (ACCESS 1) an eine netzseitige Funkstation (BS) versendet. Die Zufallszugriffs-Informationen (ACCESS 1) dienen einer zukünftigen Funkressourcenzuweisung an die Teilnehmerstation (MS) und umfassen einen ersten (PRE) und einen zweiten (MES) Teil. Die Teilnehmerstation (MS) empfängt von der netzseitigen Funkstation (BS) Informationen (CH) betreffend zu verwendende Funkressourcen, und versendet unter Verwendung dieser Funkressourcen den zweiten Teil (MES) der Zufallszugriffs-Informationen (ACCESS 1) erneut. Weiterhin betrifft die Erfindung eine Teilnehmerstation (MS) und eine netzseitige Funkstation (BS) zur Durchführung des Verfahrens.

## Beschreibung

Die Erfindung betrifft ein Verfahren zur Kommunikation per Funk, bei dem eine Teilnehmerstation Zufallszugriffs-Informationen an eine netzseitige Funkstation versendet.

In Funkkommunikationssystemen werden Nachrichten, beispielsweise mit Sprachinformation, Bildinformation, Videoinformation, SMS (Short Message Service), MMS (Multimedia Messaging Service) oder anderen Daten, mit Hilfe von elektromagnetischen Wellen über eine Funkschnittstelle zwischen sendender und empfangender Station übertragen. Bei den Stationen kann es sich hierbei je nach konkreter Ausgestaltung des Funkkommunikationssystems um verschiedenartige Teilnehmerstationen oder netzseitige Funkstationen wie Repeater, Funkzugangspunkte oder Basisstationen handeln. In einem Mobilfunkkommunikationssystem handelt es sich bei zumindest einem Teil der Teilnehmerstationen um mobile Funkstationen. Das Abstrahlen der elektromagnetischen Wellen erfolgt mit Trägerfrequenzen, die in dem für das jeweilige System vorgesehenen Frequenzband liegen.

Derzeitige Mobilfunkkommunikationssysteme sind oftmals als zellulare Systeme z.B. nach dem Standard GSM (Global System for Mobile Communication) oder UMTS (Universal Mobile Telecommunications System) mit einer Netzinfrastruktur bestehend z.B. aus Basisstationen, Einrichtungen zur Kontrolle und Steuerung der Basisstationen und weiteren netzseitigen Einrichtungen ausgebildet. Außer diesen weiträumig organisierten (supralokalen) zellularen, hierarchischen Funknetzen existieren drahtlose lokale Netze (WLANs, Wireless Local Area Networks) mit einem in der Regel räumlich deutlich stärker begrenzten Funkabdeckungsbereich. Beispiele verschiedener Standards für WLANs sind HiperLAN, DECT, IEEE 802.11, Bluetooth und WATM.

Um eine möglichst effiziente Übertragung von Daten zu erreichen, kann man das gesamte zur Verfügung stehende Frequenzband in mehrere Subbänder zerlegen (Multicarrier- bzw. Mehrträgerverfahren). Die den Mehrträgersystemen zugrunde liegende Idee ist es, das Ausgangsproblem der Übertragung eines breitbandigen Signals in die Übertragung mehrerer schmalbandiger Signale zu überführen. Ein Beispiel für ein Mehrträgerübertragungsverfahren ist OFDM (Orthogonal Frequency Division Multiplexing), bei welchem für die Subbänder zeitlich annähernd rechteckige Pulsformen verwendet werden. Der Frequenzabstand der Subbänder wird derart gewählt, dass im Frequenzraum bei derjenigen Frequenz, bei welcher das Signal eines Subbands ausgewertet wird, die Signale der anderen Subbänder einen Nulldurchgang aufweisen.

Wenn keine Verbindung zwischen einer Teilnehmerstation und einer netzseitigen Funkstation existiert und die Teilnehmerstation Funkressourcen für eine Kommunikation mit der netzseitigen Funkstation benötigt, kann diese eine Zufallszugriffs-Nachricht versenden. Hierfür steht in der Regel ein von allen Teilnehmerstationen nutzbarer Funkanal, bei UMTS und GSM als RACH (Random Accesss Channel) bezeichnet, zur Verfügung. Es sind hierbei Kollisionen zeitgleich zugreifender Teilnehmerstationen nicht völlig auszuschließen, kollidierte Zufallszugriffs-Nachrichten verschiedener Teilnehmerstationen müssen daher oftmals von der netzseitigen Funkstation verworfen werden, da sie nicht dekodiert werden können.

Der Erfindung liegt die Aufgabe zugrunde, effiziente Verfahren zur Kommunikation per Funk aufzuzeigen, bei welchem eine Teilnehmerstation Zufallszugriffs-Informationen an eine netzseitige Funkstation versendet. Weiterhin sollen eine Teilnehmerstation und eine netzseitige Funkstation zur Durchführung der Verfahren aufgezeigt werden.

Diese Aufgabe wird durch ein Verfahren mit den Merkmalen des Anspruchs 1, sowie durch ein Verfahren und Vorrichtungen mit Merkmalen von nebengeordneten Ansprüchen gelöst. Vorteilhafte Ausgestaltungen und Weiterbildungen sind Gegenstand von Unteransprüchen.

Bei dem ersten erfindungsgemäßen Verfahren zur Kommunikation per Funk versendet eine Teilnehmerstation Zufallszugriffs-Informationen an eine netzseitige Funkstation. Die Zufallszugriffs-Informationen dienen einer zukünftigen Funkressourcenzuweisung an die Teilnehmerstation. Sie umfassen einen ersten und einen zweiten Teil. Von der netzseitigen Funkstation empfängt die Teilnehmerstation Informationen betreffend zu verwendende Funkressourcen. Die Teilnehmerstation versendet unter Verwendung dieser Funkressourcen erneut den zweiten Teil der Zufallszugriffs-Informationen.

Bei dem zweiten erfindungsgemäßen Verfahren zur Kommunikation per Funk empfängt eine netzseitige Funkstation einen ersten Teil von von einer Teilnehmerstation versendeten Zufallszugriffs-Informationen. Die Zufallszugriffs-Informationen dienen einer zukünftigen Funkressourcenzuweisung an die Teilnehmerstation. Sie umfassen einen ersten und einen zweiten Teil. Die netzseitige Funkstation sendet an die Teilnehmerstation Informationen betreffend zu verwendende Funkressourcen. Die netzseitige Funkstation empfängt den unter Verwendung dieser Funkressourcen erneut von der Teilnehmerstation versendeten zweiten Teil der Zufallszugriffs-Informationen.

Die Zufallszugriffs-Informationen umfassen den ersten und den zweiten Teil. Es ist möglich, dass die Zufallszugriffs-Informationen neben dem ersten und dem zweiten Teil weitere Bestandteile aufweisen; vorzugsweise bestehen die Zufallszugriffs-Informationen jedoch lediglich aus dem ersten und dem zweiten Teil. Die Zufallszugriffs-Informationen werden von der Teilnehmerstation mit dem Ziel einer Zuweisung von Funkressourcen an die Teilnehmerstation versendet. Vorzugsweise kann diese Funkressourcenzuweisung nicht erfolgen, wenn die netzseitige Funkstation nicht den ersten und den zweiten Teil empfangen hat; der Empfang des ersten und des zweiten Teils ist in diesem Fall notwendige Voraussetzung für eine Funkressourcenzuweisung. Vorzugsweise kann die Funkressourcenzuweisung aufgrund des Empfangs des ersten und des zweiten Teils erfolgen, der Empfang weiterer Informationen von der Teilnehmerstation ist somit nicht nötig; der Empfang des ersten und des zweiten Teils ist in diesem Fall hinreichende Voraussetzung für eine Funkressourcenzuweisung. Die beiden Teile können gleichzeitig oder nacheinander gesendet werden; sie können Bestandteil der gleichen oder verschiedener Nachrichten sein.

Der zweite Teil wird nicht nur einmalig, sondern nach der ersten Versendung zum wiederholten mal von der Teilnehmerstation gesendet. Für die wiederholte Versendung werden Funkressourcen verwendet, deren Verwendung die netzseitige Funkstation der Teilnehmerstation vorgeschrieben hat, nachdem die erste Versendung bereits erfolgt ist. Für die wiederholte Versendung werden somit dedizierte Funkressourcen eingesetzt. Hierdurch wird die Wahrscheinlichkeit von Störungen bei der zweiten Übertragung des zweiten Teils reduziert. Zusätzlich zum zweiten Teil kann die Teilnehmerstation unter Verwendung der vorgegebenen Funkressourcen weitere Informationen an die netzseitige Funkstation senden, welche auch die zukünftige Funkressourcenzuweisung betreffen.

In Weiterbildung der Erfindung ist aufgrund von Störungen der Funkübertragung zwischen der Teilnehmerstation und der netzseitigen Funkstation bei der erstmaligen Übertragung der erste Teil von der netzseitigen Funkstation dekodierbar und der zweite Teil von der netzseitigen nicht dekodierbar. Hierbei kommt insbesondere eine Störung durch die Versendung von Zufallszugriffs-Nachrichten anderer Teilnehmerstationen in Betracht. Die netzseitige Funkstation kann, wenn sei den ersten, jedoch nicht den zweiten Teil dekodieren konnte, den Inhalt des ersten Teils nutzen, während sie denjenigen des zweiten Teils nicht kennt. Letzteren kann sie durch die erneute Versendung des zweiten Teils in Erfahrung bringen.

Mit Vorzug wird der erste Teil zur Adressierung der Teilnehmerstation für die Informationen betreffend die zu verwendenden Funkressourcen eingesetzt. Durch eine Bezugnahme auf den ersten Teil in der die Informationen betreffend die zu verwendenden Funkressourcen enthaltenden Nachricht kann die Teilnehmerstation erkennen, dass diese Informationen für sie bestimmt sind.

Einer Ausgestaltung der Erfindung gemäß wird der erste Teil für eine zeitliche Synchronisation zwischen der Teilnehmerstation und der netzseitigen Funkstation eingesetzt. Diese Synchronisation ist vorzugsweise Voraussetzung für eine Zuweisung von Funkressourcen an die Teilnehmerstation. Die Teilnehmerstation kann Informationen betreffend die zeitliche Synchronisation von der netzseitigen Funkstation empfangen und bei der erneuten Versendung des zweiten Teils einsetzen. Die Informationen betreffend die zeitliche Synchronisation können in einer gemeinsamen Nachricht mit den Informationen betreffend die zu verwendenden Funkressourcen an die Teilnehmerstation gesendet werden. Aufgrund des Einsatzes der Informationen betreffend die zeitliche Synchronisation durch die Teilnehmerstation wird der zweite Teil bei der erneuten Versendung zu einem bestimmten Sendezeitpunkt versendet, so dass die zeitliche Synchronisation zwischen der Teilnehmerstation und der netzseitigen Funkstation besteht. Die Informationen betreffend die zeitliche Synchronisation können der Teilnehmerstation insbesondere mitteilen, dass Nachrichten durch die Teilnehmerstation um eine bestimmte Zeitspanne verschoben gegenüber einem zeitlichen Raster zu senden sind.

In Weiterbildung der Erfindung handelt es sich bei dem ersten Teil um einen der netzseitigen Funkstation bekannten Kode, wie z.B. um eine Präambel. Vorzugsweise wählt die Teilnehmerstation diesen Kode aus einer Mehrzahl von für die Versendung von Zufallszugriffs-Informationen zur Verfügung stehenden Kodes aus. Da die netzseitige Funkstation den oder die Kodes kennt, kann sie in von ihre empfangenen Signalen nach dem oder den Kodes suchen.

Einer bevorzugten Ausführungsform der Erfindung gemäß wird für die erstmalige Versendung der Zufallszugriffs-Informationen ein Zeitpunkt von der Teilnehmerstation ausgewählt ohne Abstimmung zwischen der netzseitigen Funkstation und der Teilnehmerstation. Insbesondere erfolgt somit für die erstmalige Versendung der Zufallszugriffs-Informationen somit keine Zuweisung von dedizierten Funkressourcen für die Teilnehmerstation. Hierbei handelt es sich um ein asynchrones Zufallszugriffs-Verfahren, denn der netzseitigen Funkstation ist nicht bekannt, wann der Empfang der Zufallszugriffs-Informationen von der Teilnehmerstation zu erwarten ist.

Vorteilhaft ist es, wenn eine die Informationen betreffend die zu verwendenden Funkressourcen enthaltende Nachricht anzeigt, dass der zweite Teil der Zufallszugriffs-Informationen erneut zu versenden ist. Diese Anzeige kann implizit erfolgen oder durch ein explizites Informationselement, welches eigens zum Zwecke dieser Anzeige der Nachricht beigefügt wird.

In Ausgestaltung der Erfindung erfolgt nach Empfang durch die netzseitige Funkstation des zweiten Teils der Zufallszugriffs-Informationen eine Zuweisung von Funkressourcen an die Teilnehmerstation. Diese Zuweisung entspricht der durch die Zufallszugriffs-Informationen von der Teilnehmerstation angeforderten.

Die erfindungsgemäße Teilnehmerstation zur Kommunikation per Funk weist Mittel auf zum Versenden von Zufallszugriffs-Informationen an eine netzseitige Funkstation. Die Zufallszugriffs-Informationen dienen einer zukünftigen Funkressourcenzuweisung an die Teilnehmerstation. Sie umfassen einen ersten und einen zweiten Teil. Weiterhin sind Mittel der Teilnehmerstation vorhanden zum Empfangen von Informationen der netzseitigen Funkstation betreffend zu verwendende Funkressourcen, und Mittel zum erneuten Versenden des zweiten Teils der Zufallszugriffs-Informationen unter Verwendung dieser Funkressourcen. Weiterhin können z.B. Mittel vorgesehen sein zum Empfangen von Informationen betreffend die zeitliche Synchronisation und zum Einsetzen dieser Informationen bei der erneuten Versendung des zweiten Teils.

Die erfindungsgemäße netzseitige Funkstation zur Kommunikation per Funk weist Mittel auf zum Empfangen eines ersten Teils von von einer Teilnehmerstation versendeten Zufallszugriffs-Informationen. Die Zufallszugriffs-Informationen dienen einer zukünftigen Funkressourcenzuweisung an die Teilnehmerstation. Sie umfassen einen ersten und einen zweiten Teil. Weiterhin sind Mittel der netzseitigen Funkstation vorhanden zum Senden von Informationen betreffend zu verwendende Funkressourcen an die Teilnehmerstation, und Mittel zum Empfangen des unter Verwendung dieser Funkressourcen von der Teilnehmerstation versendeten zweiten Teils der Zufallszugriffs-Informationen. Weiterhin können z.B. Mittel vorgesehen sein zum Versenden von Informationen betreffend die zeitliche Synchronisation an die netzseitigen Funkstation, wobei der erste Teil für die Bestimmung der Informationen betreffend die zeitliche Synchronisation zwischen der Teilnehmerstation und der netzseitigen Funkstation eingesetzt wird.

Die erfindungsgemäße Teilnehmerstation und die erfindungsgemäße netzseitige Funkstation eignen sich insbesondere zur Durchführung der erfindungsgemäßen Verfahren, wobei dies auch auf die Ausgestaltungen und Weiterbildungen zutreffen kann. Hierzu können sie weitere geeignete Mittel umfassen.

Im folgenden wird die Erfindung anhand eines Ausführungsbeispiels näher erläutert. Dabei zeigen:
- Figur 1:: einen Ausschnitt aus einem Mobilfunkkommunikationssystem,
- Figur 2:: ein Ablaufdiagramm,
- Figur 3:: den Aufbau einer Nachricht.

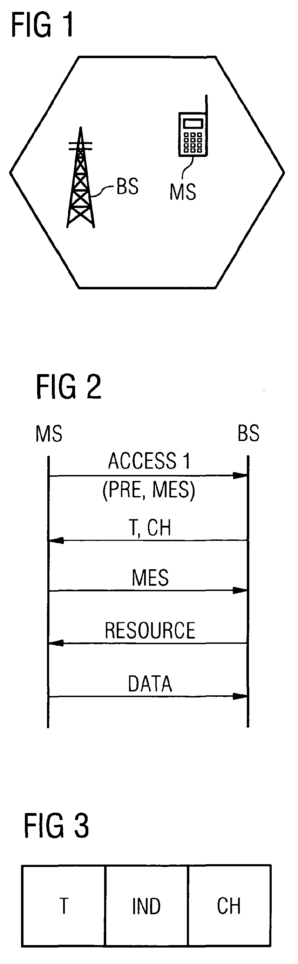

Der in Figur 1 dargestellte Ausschnitt aus einem Mobilfunkkommunikationssystem zeigt die Funkzelle einer netzseitigen Funkstation BS. In dieser befindet sich die Teilnehmerstation MS. Es wird die Situation betrachtet, dass die Teilnehmerstation MS Funkressourcen für die Kommunikation mit der netzseitigen Funkstation BS benötigt. Hierbei handelt es sich vorzugsweise um Funkressourcen für die Kommunikation in Aufwärtsrichtung, d.h. für eine Nachrichtenversendung von der Teilnehmerstation MS zu der netzseitigen Funkstation BS. Zusätzlich oder alternativ kann es sich hierbei auch um Funkressourcen für die Kommunikation in Abwärtsrichtung, d.h. für eine Nachrichtenversendung von der netzseitigen Funkstation BS zu der Teilnehmerstation MS, handeln. Aus Gründen der Übersichtlichkeit sind weitere netzseitige Einrichtungen und weitere Teilnehmerstationen nicht in Figur 1 dargestellt. Bei dem betrachteten Mobilfunkkommunikationssystem handelt es sich vorzugsweise um ein 3G LTE (LTE: Long Term Evolution) System. Die Erfindung ist jedoch auch auf andere Funkkommunikationssysteme anwendbar.

Figur 2 zeigt ein Ablaufdiagramm eines Verfahrens zur Vergabe von Funkressourcen an die Teilnehmerstation MS. Zu Beginn versendet die Teilnehmerstation MS eine Zufallszugriffsnachricht ACCESS 1. Die Zufallszugriffsnachricht ACCESS 1 wird auf einem hierfür zur Verfügung stehenden Funkkanal gesendet, welcher der Teilnehmerstation MS bekannt ist und auf welchen alle Teilnehmerstationen, welche Funkressourcen benötigen, zugreifen können. Hierbei handelt es sich um ein so genanntes "contention based" Verfahren, d.h. die Teilnehmerstationen stehen in Bezug auf den Zugriff auf Funkressourcen im Wettbewerb zueinander. Der Zufallszugriffsfunkkanal, bei GSM und UMTS als RACH (Random Access Channel) bezeichnet, steht der Teilnehmerstation MS nicht exklusiv zur Verfügung. Somit ist es möglich, dass Zufallszugriffsnachrichten ACCESS 1, welche verschiedene Teilnehmerstationen gleichzeitig auf diesem gemeinsamen Kanal versenden, miteinander kollidieren. Im Falle von Kollisionen von Nachrichten, d.h. bei einem gleichzeitigen Empfang verschiedener Nachrichten bei einem Empfänger, ist es möglich, dass der Empfänger, im betrachteten Fall die netzseitige Funkstation BS, eine oder mehrere der kollidierenden Nachrichten nicht korrekt dekodieren kann. Dies bedeutet, dass dem Empfänger der Inhalt der jeweiligen Nachricht nicht bekannt ist.

Die Zufallszugriffsnachricht ACCESS 1 umfasst die beiden Teile PRE und MES. Bei dem ersten Teil PRE handelt es sich um eine Präambel, d.h. einen bestimmten Kode. Es existiert eine Mehrzahl solcher Präambeln, von welchen jeweils einer von den Teilnehmerstationen ausgewählt und für die Zufallszugriffsnachrichten ACCESS 1 verwendet wird. Kollidieren zwei oder mehrere Präambeln PRE, so kann die netzseitige Funkstation BS diese aufgrund von Korrelationseigenschaften der Präambeln oftmals dennoch korrekt dekodieren. Z.B. können die Präambeln orthogonal oder fast orthogonal zueinander sein. Die Verwendung von derartigen Präambeln ist beschrieben z.B. in
3GPP TS 25.814 V1.2.3, insbesondere Kapitel 9.1.2.1.2.3,
und
Thomas Keller, Lorenzo Piazzo, Paolo Mandarini, Lajos Hanzo: "Orthogonal frequency division multiplex synchronization techniques for frequency-selective fading channels", IEEE Journal on Selected Areas in Communications, vol. 19, no. 6, Juni 2001, pp. 999 - 1008.

Bei dem betrachten Zufallszugriffsverfahren handelt es sich um einen nicht-synchronisierten Zufallszugriff. Dies bedeutet, dass die Teilnehmerstation MS ihre Zufallszugriffsnachricht ACCESS 1 zu einem von ihr bestimmten Zeitpunkt versendet, welcher der netzseitigen Funkstation BS nicht bekannt ist. Die netzseitige Funkstation BS verwendet den Empfangszeitpunkt der Präambel PRE, um für die Teilnehmerstation MS eine Größe zur Zeitsynchronisation, die so genannte "timing advance", zu bestimmen. Diese gibt an, zu welchen Zeitpunkten bezogen auf ein vorhandenes Zeitraster die Teilnehmerstation MS Nachrichten auf ihr zugewiesenen Funkressourcen an die netzseitige Funkstation BS versenden darf, so dass diese Nachrichten nicht mit Nachrichten anderer Teilnehmerstationen kollidieren. Wenn die netzseitige Funkstation BS die Präambel PRE der Zufallszugriffsnachricht ACCESS 1 dekodieren kann, wird die Größe zur Zeitsynchronisation ermittelt und im Anschluss der Teilnehmerstation MS mitgeteilt.

Die Präambel PRE zeigt der netzseitigen Funkstation BS an, dass eine Teilnehmerstation Funkressourcen nachfragt. Da die Präambel PRE jedoch keine teilnehmerstationsspezifischen Informationen beinhaltet, ist der netzseitigen Funkstation BS aufgrund der Präambel PRE nicht bekannt, welche Teilnehmerstation die Funkressourcen nachfragt, in welchem Umfang Funkressourcen benötigt werden, usw. Vor der Zuweisung der Funkressourcen an die die Zufallszugriffsnachricht ACCESS 1 sendende Teilnehmerstation MS benötigt die netzseitige Funkstation BS somit weitere Informationen von der bzw. über die Teilnehmerstation MS.

Die weiteren von der netzseitigen Funkstation BS benötigten Informationen sind in dem zweiten Teil MES der Zufallszugriffsnachricht ACCESS 1 vorhanden. Dieser zweite Teil MES kann nach oder vor dem ersten Teil PRE gesendet werden. Alternativ kann der zweite Teil MES auch gleichzeitig zur Präambel PRE gesendet werden. In einem OFDM-System z.B. können für die Präambel PRE und den zweiten Teil MES bei einer gleichzeitigen Versendung unterschiedliche Subbänder verwendet werden.

Wenn die netzseitige Funkstation BS sowohl die Präambel PRE als auch den zweiten Teil MES korrekt dekodieren kann, kann eine Zuweisung von Funkressourcen an die Teilnehmerstation MS erfolgen. Denn unter Verwendung der Präambel PRE kann die Größe zur Zeitsynchronisation bestimmt werden, und der Teil MES enthält alle Informationen, welche netzseitig für die Zuordnung von Funkressourcen zur Teilnehmerstation MS benötigt werden. Kann die netzseitige Funkstation BS weder die Präambel PRE noch den zweiten Teil MES korrekt dekodieren, so ist der Zufallszugriff der Teilnehmerstation MS fehlgeschlagen. Die netzseitige Funkstation BS sendet in diesem Fall keine Antwort an die Teilnehmerstation MS, so dass diese zu einem späteren Zeitpunkt erneut ihre Zufallszugriffsnachricht ACCESS 1 ausstrahlt.

Im folgenden wird der Fall betrachtet, dass die netzseitige Funkstation BS zwar die Präambel PRE, nicht aber den Teil MES dekodieren kann. Aufgrund der empfangenen Präambel PRE kann für die Teilnehmerstation die Größe zur Zeitsynchronisation MS bestimmt werden, außerdem ist die Teilnehmerstation MS durch die von ihr gewählte Präambel PRE adressierbar. Im Anschluss an den erfolgreichen Empfang der Präambel PRE teilt die netzseitige Funkstation BS, in Figur 2 dargestellt, der Teilnehmerstation MS die von ihr zu verwendende Größe zur Zeitsynchronisation T mit. Außerdem weist die netzseitige Funkstation BS der Teilnehmerstation MS Funkressourcen CH für die erneute Versendung des Teils MES zu. Diese Zuweisung der Funkressourcen und die Mitteilung der Größe zur Zeitsynchronisation T kann in einer gemeinsamen oder in getrennten Nachrichten an die Teilnehmerstation MS erfolgen. Die Teilnehmerstation MS erkennt an einem Bezug auf die von ihr gewählte Präambel PRE, dass die Größe zur Zeitsynchronisation T und die Funkressourcenzuweisung CH ihr gelten.

Figur 3 zeigt beispielhaft, wie eine Nachricht, welche die Größe zur Zeitsynchronisation T und die Funkressourcenzuweisung CH enthält, aufgebaut sein kann. Neben den genannten Größen T und CH enthält die Nachricht der netzseitigen Funkstation BS einen Parameter IND. Dieser zeigt an, dass die netzseitige Funkstation BS zwar die Präambel PRE, nicht aber den Teil MES dekodieren konnte, so dass eine erneute Versendung des Teils MES unter Verwendung der Funkressourcen CH zu erfolgen hat. Der Parameter IND kann beispielsweise folgendermaßen eingesetzt werden: weist er den Wert 0 auf, so beziehen sich die Funkressourcen CH auf die Versendung des Teils MES; wird er auf den Wert 1 gesetzt, so handelt es sich bei den Funkressourcen CH um diejenigen, deren Zuweisung die Teilnehmerstation MS mit der Zufallszugriffsnachricht ACCESS 1 angefragt hat. Zusätzlich oder alternativ zur Verwendung des Parameters IND ist es auch möglich, dass die Teilnehmerstation MS anhand der Art der Funkressourcen CH erkennt, dass es sich um Funkressourcen für die Versendung des Teils MES, und nicht um die angefragten Funkressourcen handelt.

Im Anschluss sendet die Teilnehmerstation MS erneut den Teil MES. Hierzu werden die Funkressourcen CH und die Größe zur Zeitsynchronisation T verwendet. Dadurch, dass der Teilnehmerstation MS die Funkressourcen CH eigens für die Versendung des Teils MES zugewiesen wurden, und durch die Verwendung der einen Nachrichtenüberlapp verhindernden Größe zur Zeitsynchronisation T ist die Wahrscheinlichkeit einer Störung des Teils MES durch eine Nachricht einer anderen Teilnehmerstation gering. Bei den Funkressourcen CH handelt es sich um Gegensatz zu den für die Versendung der Zufallszugriffsnachricht ACCESS 1 verwendeten Funkressourcen nicht um Ressourcen eines wettbewerbsbehafteten (englisch: "contention based") Kanals, sondern eines wettbewerbsfreien (englisch: "contention free") Kanals.

Nachdem die netzseitige Funkstation BS den Teil MES erfolgreich empfangen und ausgewertet hat, erfolgt mittels der Nachricht RESOURCE eine Zuweisung der angeforderten Funkressourcen. Die zugewiesenen Funkressourcen werden für eine Versendung von Nachrichten DATA durch die Teilnehmerstation MS eingesetzt. Die Nachrichten DATA können hierbei Nutzdaten und/oder Signalisierungsinformationen enthalten.

Das beschriebene Verfahren eignet sich sowohl für Situationen, in welchen eine Vielzahl von Teilnehmerstationen Funkressourcen mittels Zufallszugriffsnachrichten ACCESS 1 anfordern, als auch für Situationen, in welchen lediglich wenige derartige Anforderungen stattfinden. In Zeiten hoher Nachfrage nach Funkressourcen ist die Wahrscheinlichkeit von Kollisionen der Zufallszugriffsnachrichten ACCESS 1 groß. Die Störung der Übertragung betrifft v.a. den Teil MES, da die Präambel PRE aufgrund ihrer Orthogonalitätseigenschaften in Bezug auf andere Präambeln besser vor Kollisionen geschützt ist. Daher ist es sinnvoll, nicht eine erneute Versendung der Zufallszugriffsnachrichten ACCESS 1 zu einem von der Teilnehmerstation MS bestimmten Zeitpunkt durchzuführen, da hierfür erneut eine große Kollisionsgefahr besteht. Es eignet sich vielmehr die Versendung der für die Funkressourcenzuweisung benötigten Informationen des Teils MES unter Verwendung von der Teilnehmerstation MS zugewiesenen Funkressourcen, da hierbei die Wahrscheinlichkeit einer kollisionsfreien Übertragung größer ist.

In Zeiten geringer Nachfrage nach Funkressourcen hingegen ist die Wahrscheinlichkeit von Kollisionen von Zufallszugriffsnachrichten ACCESS 1 gering. Daher ist es vorteilhaft, dass eine Zufallszugriffsnachricht ACCESS 1 nicht nur die Präambel PRE, sondern auch den Teil MES umfasst, so dass der netzseitige Funkstation BS nach störungsfreiem Empfang der gesamten Zufallszugriffsnachricht ACCESS 1 alle für die Zuweisung von Funkressourcen benötigten Informationen zur Verfügung stehen. Die angeforderte Zuweisung von Funkressourcen kann somit ohne Nachfrage von weiteren Informationen von der Teilnehmerstation MS erfolgen. Hierdurch wird eine Verzögerung bei der Funkressourcenzuweisung weitestgehend vermieden. Zusätzlich zu der Zuweisung der Funkressourcen wird die Teilnehmerstation auch über die Größe zur Zeitsynchronisation T informiert.

Der Teilnehmerstation MS ist zum Zeitpunkt der Versendung der Zufallszugriffsnachricht ACCESS 1 nicht bekannt, wie groß die Wahrscheinlichkeit einer Kollision ihrer Zufallszugriffsnachricht ACCESS 1 mit Zufallszugriffsnachrichten anderer Teilnehmerstationen ist. Daher kann die Teilnehmerstation MS keine sinnvolle Entscheidung darüber treffen, ob die Versendung von lediglich der Präambel PRE oder die Versendung der Präambel PRE in Kombination mit dem Teil MES vorteilhafter wäre. Daher versendet die Teilnehmerstation MS grundsätzlich sowohl die Präambel PRE als auch den Teil MES, so dass abhängig von der Dekodierbarkeit durch die netzseitige Funkstation BS auf verschiedene Weisen fortgefahren werden kann: bei einem störungsfreien Empfang der gesamten Zufallszugriffsnachricht ACCESS 1 erfolgt die Zuweisung der angeforderten Funkressourcen; bei einer Unmöglichkeit der Dekodierung der gesamten Zufallszugriffsnachricht ACCESS 1, d.h. sowohl der Präambel PRE als auch des Teils MES, erhält die Teilnehmerstation MS keine Antwort, die Zufallszugriffsnachricht ACCESS 1 ist erneut zu versenden; bei einer Dekodierung der Präambel PRE, aber nicht des Teils MES erfolgt wie zu Figur 2 erläutert eine Funkressourcenzuweisung für eine erneute Versendung des Teils MES.

## Patentansprüche

1. Verfahren zur Kommunikation per Funk, bei dem eine Teilnehmerstation (MS)
Zufallszugriffs-Informationen (ACCESS 1) an eine netzseitige Funkstation (BS) versendet, wobei die Zufallszugriffs-Informationen (ACCESS 1) einer zukünftigen Funkressourcenzuweisung an die Teilnehmerstation (MS) dienen und einen ersten (PRE) und einen zweiten (MES) Teil umfassen,
von der netzseitigen Funkstation (BS) Informationen (CH) betreffend zu verwendende Funkressourcen empfängt,
unter Verwendung dieser Funkressourcen den zweiten Teil (MES) der Zufallszugriffs-Informationen (ACCESS 1) erneut versendet.

2. Verfahren zur Kommunikation per Funk, bei dem eine netzseitige Funkstation (BS)
einen ersten Teil (PRE) von von einer Teilnehmerstation (MS) versendeten Zufallszugriffs-Informationen (ACCESS 1) empfängt, wobei die versendeten Zufallszugriffs-Informationen (ACCESS 1) einer zukünftigen Funkressourcenzuweisung an die Teilnehmerstation (MS) dienen und den ersten (PRE) und einen zweiten (MES) Teil umfassen,
an die Teilnehmerstation (MS) Informationen (CH) betreffend zu verwendende Funkressourcen sendet,
den unter Verwendung dieser Funkressourcen von der Teilnehmerstation (MS) erneut versendeten zweiten Teil (MES) der Zufallszugriffs-Informationen (ACCESS 1) empfängt.

3. Verfahren nach Anspruch 1 oder 2, bei dem
aufgrund von Störungen der Funkübertragung zwischen der Teilnehmerstation (MS) und der netzseitigen Funkstation (BS) bei der erstmaligen Übertragung der erste Teil (PRE) von der netzseitigen Funkstation (BS) dekodierbar und der zweite Teil (MES) von der netzseitigen Funkstation (BS) nicht dekodierbar ist.

4. Verfahren nach einem der Ansprüche 1 bis 3, bei dem
der erste Teil (PRE) zur Adressierung der Teilnehmerstation (MS) für die Informationen (CH) betreffend die zu verwendenden Funkressourcen eingesetzt wird.

5. Verfahren nach einem der Ansprüche 1 bis 4, bei dem
der erste Teil (PRE) für eine zeitliche Synchronisation zwischen der Teilnehmerstation (MS) und der netzseitigen Funkstation (BS) eingesetzt wird.

6. Verfahren nach Anspruch 5, bei dem
die Teilnehmerstation (MS) Informationen (T) betreffend die zeitliche Synchronisation von der netzseitigen Funkstation (BS) empfängt und bei der erneuten Versendung des zweiten Teils (MES) einsetzt.

7. Verfahren nach einem der Ansprüche 1 bis 6, bei dem
es sich bei dem ersten Teil (PRE) um einen der netzseitigen Funkstation (BS) bekannten Kode handelt.

8. Verfahren nach einem der Ansprüche 1 bis 7, bei dem
für die erstmalige Versendung der Zufallszugriffs-Informationen (ACCESS 1) ein Zeitpunkt von der Teilnehmerstation (MS) ausgewählt wird ohne Abstimmung zwischen der netzseitigen Funkstation (BS) und der Teilnehmerstation (MS).

9. Verfahren nach einem der Ansprüche 1 bis 8, bei dem
eine die Informationen (CH) betreffend die zu verwendenden Funkressourcen enthaltende Nachricht anzeigt, dass der zweite Teil (MES) der Zufallszugriffs-Informationen (ACCESS 1) erneut zu versenden ist.

10. Verfahren nach einem der Ansprüche 1 bis 9, bei dem
nach Empfang des zweiten Teils (MES) der Zufallszugriffs-Informationen (ACCESS 1) durch die netzseitige Funkstation (BS) eine Zuweisung von Funkressourcen an die Teilnehmerstation (MS) erfolgt.

11. Teilnehmerstation (MS) zur Kommunikation per Funk, mit
Mitteln zum Versenden von Zufallszugriffs-Informationen (ACCESS 1) an eine netzseitige Funkstation (BS), wobei die Zufallszugriffs-Informationen (ACCESS 1) einer zukünftigen Funkressourcenzuweisung an die Teilnehmerstation (MS) dienen und einen ersten (PRE) und einen zweiten (MES) Teil umfassen,
Mitteln zum Empfangen von Informationen (CH) der netzseitigen Funkstation (BS) betreffend zu verwendende Funkressourcen,
Mitteln zum erneuten Versenden des zweiten Teils (MES) der Zufallszugriffs-Informationen (ACCESS 1) unter Verwendung dieser Funkressourcen.

12. Netzseitige Funkstation (BS) zur Kommunikation per Funk, mit
Mitteln zum Empfangen und Auswerten eines ersten Teils (PRE) von von einer Teilnehmerstation (MS) versendeten Zufallszugriffs-Informationen (ACCESS 1), wobei die versendeten Zufallszugriffs-Informationen (ACCESS 1) einer zukünftigen Funkressourcenzuweisung an die Teilnehmerstation (MS) dienen und den ersten (PRE) und einen zweiten (MES) Teil umfassen,
Mitteln zum Senden von Informationen (CH) betreffend zu verwendende Funkressourcen an die Teilnehmerstation (MS), Mitteln zum Empfangen und Auswerten des unter Verwendung dieser Funkressourcen von der Teilnehmerstation (MS) erneut versendeten zweiten Teils (MES) der Zufallszugriffs-Informationen (ACCESS 1).
